# EUROPEAN PATENT SPECIFICATION

(11) **EP 2 595 774 B1**
(45) Date of publication and mention of the grant of the patent: **14.05.2014**
(21) Application number: 11755113.5
(22) Date of filing: 20.07.2011
(51) Int. Cl.: B23K 9/10, B23K 9/32, B23F 21/00

(54) **SYSTEMS FOR AND METHODS OF MANAGING LICENSES IN WELDING EQUIPMENT**
SYSTEME UND VERFAHREN ZUR VERWALTUNG VON LIZENZEN EINER SCHWEISSANLAGE
SYSTÈMES ET PROCÉDÉS POUR LA GESTION DES LICENCES DES MACHINES À SOUDER

(30) Priority: 20.07.2010 US 839890
(43) Date of publication of application: 29.05.2013
(73) Proprietor: Lincoln Global, Inc., City of Industry, CA 91748 (US)
(72) Inventor: HILLEN, Edward, D., Painesville OH 44077 (US); BRANT, Dmitry, Richmond Heights HO 44143 (US)
(74) Representative: GROSSE SCHUMACHER KNAUER VON HIRSCHHAUSEN
(86) International application number: PCT/IB2011/001695
(87) International publication number: WO 2012/010957

(56) References cited:
- JP-A- 2010 176 434
- US-A1- 2005 050 315
- US-A1- 2006 156 025
- US-A1- 2007 056 942
- US-A1- 2007 267 394
- US-B1- 6 557 105

## Description

Systems and methods, according to the preamble of claims 1, 9 (see, for example, US 2007/267394 A) and claims 8 and 15 (see, for example, US 2007/056942), consistent with the invention relate to licensing features in welding equipment.

### Description of the Related Art

Welding systems sold today include many different features. Many of these features are optional, and may be enabled or disabled on a particular welding system sold to a particular customer. This provides flexibility in terms of the total cost of the welding system to the customer.

However, there are instances where a customer may wish to add an optional feature to a purchased welding system. In the past, adding such a feature required the visit of a skilled technician to manually update the welding system's firmware. Such an arrangement is time consuming, and requires the presence of the technician. This is not an optimal situation for many customers, particularly when the welding system is being used in a high-volume manufacturing environment.

Thus, a quicker and more flexible system for modifying the feature sets of welding systems is desired.

### BRIEF SUMMARY OF THE INVENTION

The invention provides a system for modifying the feature sets of welding systems.

According to an aspect of the invention, there is provided a system for managing licenses in a welding system, comprising: a welding system comprising a memory storing an unlicensed first optional welding function, and a facilitation system for obtaining the first license from the license management system and providing it to the memory of the welding system to license the first optional welding function, see claim 1.

According to another aspect of the invention, there is provided a system for managing licenses in a welding system, comprising a welding system comprising a memory storing a weld table, wherein the weld table includes operating instructions for the welding system and an optional function identifier indicating whether the particular operating instruction uses an optional feature that requires a license, see claim 8.

According to another aspect of the invention, there is provided a method of managing licenses in a welding system, including using a facilitation system to request a first license for an unlicensed first optional welding function in a welding system memory from a license management system and providing it to the memory of the welding system to license the first optional welding function, see claim 9.

According to another aspect of the invention, there is provided a method of managing licenses in a memory of a welding system which also stores a weld table, wherein the weld table includes operating instructions for the welding system and an optional function identifier indicating whether the particular operating instruction uses an optional feature that requires a license, see claim 15.

The above stated object as well as other objects, features and advantages of the invention will become clear to those skilled in the art upon review of the following description, claims and drawings.

### BRIEF DESCRIPTION OF THE DRAWINGS

The above and/or other aspects of the invention will be more apparent by describing in detail exemplary embodiments of the invention with reference to the accompanying drawings, in which:
Fig. 1 is a diagram of a system for modifying the feature sets of welding systems according to an exemplary embodiment of the invention;
Fig. 2a is a diagram of a license registry according to an exemplary embodiment of the invention;
Fig. 2b is a diagram of a license record according to an exemplary embodiment of the invention;
Fig. 3 is a table of error displays according to an exemplary embodiment of the invention;
Fig. 4 is a diagram of operating instructions according to an exemplary embodiment of the invention;
Fig. 5 is a diagram of a license file according to an exemplary embodiment of the invention;
Fig. 6 is a diagram of a method of managing licenses in a welding system according to an exemplary embodiment of the invention; and
Fig. 7 is a diagram of a method of managing licenses in a welding system according to an exemplary embodiment of the invention.

### DETAILED DESCRIPTION OF EXEMPLARY EMBODIMENTS

Exemplary embodiments of the invention will now be described below by reference to the attached Figures. The described exemplary embodiments are intended to assist the understanding of the invention, and are not intended to limit the scope of the invention in any way. Like reference numerals refer to like elements throughout.

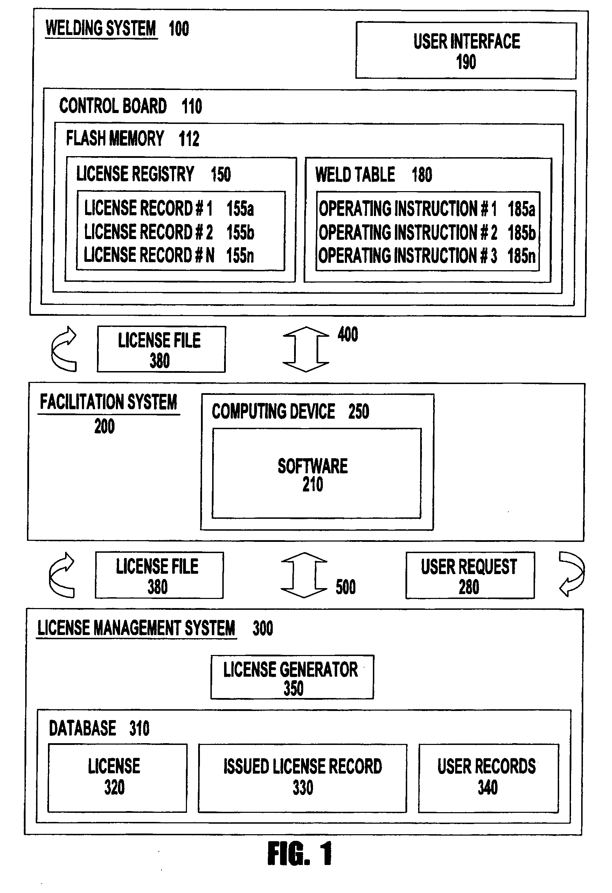

FIG. 1 is a diagram of a licensing system according to an exemplary embodiment of the invention. The licensing system includes welding system 100, facilitation system 200 and license management system 300. Welding system 100 may be any welding machine of a manual, automatic, or semi-automatic design. Facilitation system 200 may be any electronic device capable of interfacing with welding system 100 and license management system 300, such as a personal computer. License management system 300 may be any electronic device capable of storing license information, such as a server.

Welding system 100 may be configured to perform many optional functions. For example, such optional functions may include those functions provided in assignee's current welding systems, such as: (1) Tandem Sync, where two power sources power a single welding torch, and are electrically synchronized such that a positive pulse from one of the machines corresponds to an equal and opposite "troph" from the second machine, which is important for minimizing arc blow; (2) communications (e.g., bar code or laser scanners), where the welding system is capable of reading information from workpieces, consumables, employees, etc.; (3) laser welding, where laser welding capability is provided in conjunction with electrical welding; (4) Advanced Production Monitoring features, where the welding system becomes capable of recording and logging its own welds and welding statistics, and allowing a remote client to retrieve said information for storage in a database; and (5) Special Weld Modes, where the welding system becomes capable of using nonstandard or specialized welding procedures, such as those used for specialized electrode compositions, electrode sizes, or gas combinations. This listing of optional functions is provided for exemplary purposes only, and is not intended to limit the scope of the invention.

The capability to perform these optional functions may be either pre-installed in the welding system 100 prior to sale to a customer, or can be later installed in the welding system 100. Pre-installation of optional functions allows a standard production code to be written and installed in the welding system 100 (*i.e*., separate codes do not have to be written for each permutation of feature sets in welding systems 100). In cases where the capability to perform optional functions is pre-installed, a user of the welding system 100 may only use the optional functions for which the user is licensed. In other words, even though the capability to perform an optional function is resident in the welding system 100, the optional function is not operational to the user unless a valid license to use the optional function is contained in welding system 100. Thus, when a user would like to add an optional function to the welding system 100, the user must obtain a license key for the optional function, and add it to welding system 100. After the license key is added, the optional function is unlocked, and available for use.

In an exemplary embodiment of the invention, a method and system is provided for customers to request, acquire and install a license key to enable an optional function in a welding system.

Welding system 100 includes control board 110 and flash memory 112. Control board 110 contains a control board serial number that is set when the board is manufactured, and cannot be modified by the user. The serial number may be any combination of letters, digits, symbols, etc., or other non-alphanumeric identification information, that provides a unique identification of a particular control board 110.

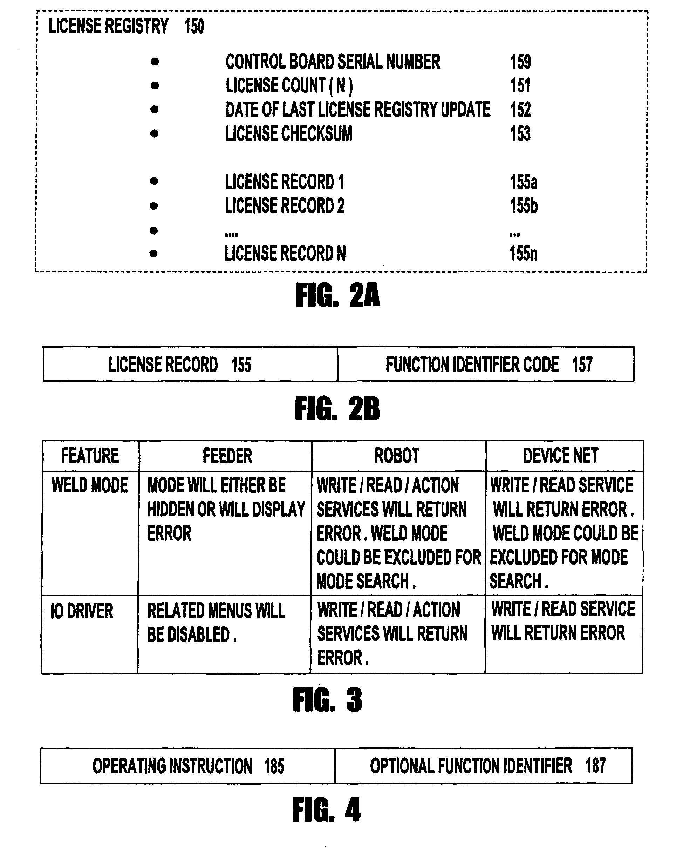

Flash memory 112 includes a License Registry 150 stored therein. As shown in FIG. 2A, license registry 150 contains at least the control board serial number 159 and license records 155 (in this embodiment, 155a, 155b, 155n) for each optional function that has been licensed for use in welding system 100. Additionally, license registry 150 may also contain a count 151 of the licenses stored therein, a date of the last license registry update 152, and a checksum 153. As shown in FIG. 2B, each license record 155 contains an identifier code 157 unique to that optional function.

Each time welding system 100 powers up, or is otherwise reset, it may evaluate the License Registry 150 and disable, or otherwise indicate as being unavailable, any unlicensed optional functions. If a user attempts to access an unlicensed function, welding system 100 will return an error dependent upon the optional function and where the attempt originates from. Error messages may be displayed in any suitable form, such as audibly, visually, or via tactile response. Visual error messages may be provided on user interface 190. A table showing exemplary error messages is shown in FIG. 3.

Flash memory may also include a Weld Table 180. Weld Table 180 provides operating instructions 185 for the welding system. As shown in FIG. 4, each operating instruction 185 includes an optional function identifier 187 indicating whether the particular operating instruction 185 uses an optional feature. An identifier of 0 signifies that the optional feature is not licensed, and the operating instruction 185 cannot run. An identifier of 1 signifies that the optional feature is licensed, and the operating instruction can run. Although FIG. 4 shows a one-to-one relationship between operating instruction 185 and optional function identifier 187, operating instruction 185 may also include multiple instructions for welding system 100, and an overall indication of whether any of the multiple instructions require an unlicensed optional function.

In a default state, License Registry 150 is empty, *i.e.,* it contains no licenses. License Registry 150 may be updated via facilitation tool 200, by any authorized party (e.g., an end user, technician, or employee of assignee.

Facilitation system 200 may be any system capable of interfacing with welding system 100 and license management system 300, so that a license may be transferred from license management system 300 and installed in welding system 100. Facilitation system 200 may also be capable of deleting licenses from flash memory 112 of welding system 100, transferring licenses from one welding system 100 to another, or any other such maintenance or organization of licenses between and amongst welding systems.

In this exemplary embodiment, facilitation tool 200 includes facilitation software 210 that is capable of communicating with license management system 300 to obtain an appropriate license, and is capable of communicating with flash memory 112 of welding system 100 to update license registry 150 therein. Facilitation software 210 may be provided in any known manner, such as on media with welding system 100, or downloadable from a website. Facilitation software 210 may be provided as a client program on computing device 250, which may be any appropriate hardware, such as a handheld device, laptop, desktop, server, tablet PC, PDA, smartphone, etc. Alternatively, the function of facilitation software 210 may be a provided via a dedicated web page or other internet or network-based means. Facilitation system 200 may communicate with welding system 100 and license management system 300 by any appropriate method, such as direct cable connection, ethernet, wireless connection, LAN, WAN, internet, VPN, etc.

License management system 300 may be any electronic device capable of storing license information. For example, license management system 300 can be any combination of hardware and software including, but not limited to, web servers, hubs, routers, domain name servers, server clusters, databases, firewalls, software applications and other computing machinery or tools useful for facilitating the exchange of information via a computer network (*e.g*., the internet).

In the exemplary embodiment, license management system 300 includes database 310, which may store licenses 320 for various optional functions available in welding systems 100. Database 310 also may store issued license records 330 which associate valid licenses for optional functions in particular welding systems 100. This association can be maintained by using the serial number of a control board 110 of a particular welding system 100 with a particular license 320. Each license record 330 may also include all information used to create the particular license record (*e.g*., time, date, user, license file, control board serial number, etc.). Database 310 also may store user records 340, which may include, but are not limited to, license activity and event logs, license user account information, and any license data associated with a respective license user account. Although records 320, 330 and 340 are illustrated separately in database 310 in this embodiment, the records may be combined into one or more tables in one or more databases in any appropriate manner that fulfills the functionality described herein.

License management system 300 may also provide graphical representations to a user of license records via facilitation system 200. For example, the graphical representation could be provided on client software 210 running on a computing device 250, or could be provided via web-based software 210 running in a browser on computing device 250, although any method that fulfills the functionality described herein may be used. The graphical representation may include, for example: (1) a list of optional functions available for a particular welding system 100; (2) an identification of which of those optional functions are licensed; and (3) a method to select one of more of the unlicensed optional functions for enablement.

License management system 300 may also include the ability to generate a license for use in a welding system 100. This may be accomplished by user request from facilitation system 200, or in any other manner that fulfills the functionality described herein. For example, if a user selects an unlicensed optional function for enablement, license management system should assign a license 320 to a particular welding system (using, *e.g*., the serial number of its control board 110), and add that assignment as an issued license record 330.

Once obtained, license 320 is transferred from license management system 300 to facilitation system 200 via a license file 380. License file 380 contains the license 320, and may contain any additional information to fulfill the functionality described herein. In this exemplary embodiment, the license file 380 contains at least the license 320 and board serial number 382. License file 380 may be in any appropriate format, and may be sent in an encrypted format to protect the information therein.

The Facilitation tool 200 may receive license file 380 and use the information therein to add the selected license 320 to the appropriate welding system 100.

In the illustrated embodiment, license file 380 contains only the information necessary to update license registry 150 in welding system 100. Alternatively, the license file may contain multiple licenses to replace some or all of the license registries 150 in multiple welding systems 100. Such an arrangement can be used if multiple welding systems are used, if the capabilities of two or more welding systems 100 need to be exchanged, if there is an error in a license registry 150, or if a control board 110 has been replaced.

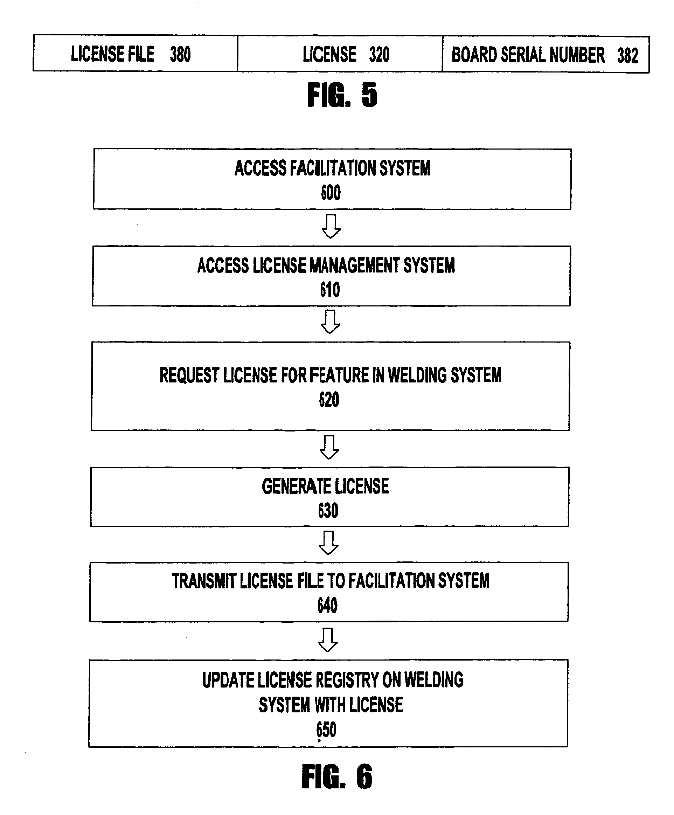

An exemplary method of updating licenses according to the invention is illustrated in FIG. 6. In operation 600, a user accesses facilitation system 200. For example, the user may access client software 210 installed on a laptop computer 250, or web-based software 210 via a browser on laptop computer 250, although any other appropriate method may be used.

In operation 610, the user accesses license management system 300 via facilitation system 200. For example, software 210 establishes a connection with license management system 300.

In operation 620, the user requests a license from license management system for a feature in welding system 100. For example, software 210 may display a listing of features that are enabled or disabled for a specific welding system 100, and allow the selection by the user of which of the disabled features he would like to add to welding system 100. The specific welding system 100 can be identified by descriptive information, such as: (1) the model and version designation; and (2) the serial number of the control board 110. This information can either be input by the user, automatically obtained by the facilitation system 200 or license management system 300, or otherwise provided to license management system 300 in any appropriate fashion.

The user may alternatively request a license via any method that provides the functionality described herein. For example, a user can contact the licensor by e-mail or telephone. In any case, the user would provide (or *e.g*., the facilitation system 200 would automatically obtain): (1) the model and version designation of welding system 100; (2) what feature the user would like added, identified by a unique number; (3) the serial number of the control board 110. All of this information could be obtained from inspection of the welding system 100, the use of management or diagnostic tools that are provided with welding system 100, or detected by facilitation system 200.

In operation 630, license management system 300 generates license 320, which is thereafter included in license file 380. For example, license management system may identify the appropriate license 320 based on the user's request and descriptive information about the welding system 100, and combine the license 320 with the descriptive information in license file 380.

In operation 640, license management system 300 transmits license file 380 to facilitation system 200. For example, the license file 380 could be transmitted via direct file transfer, e-mail, etc. The license file 380 could also be stored on media and sent via surface mail, courier, etc.

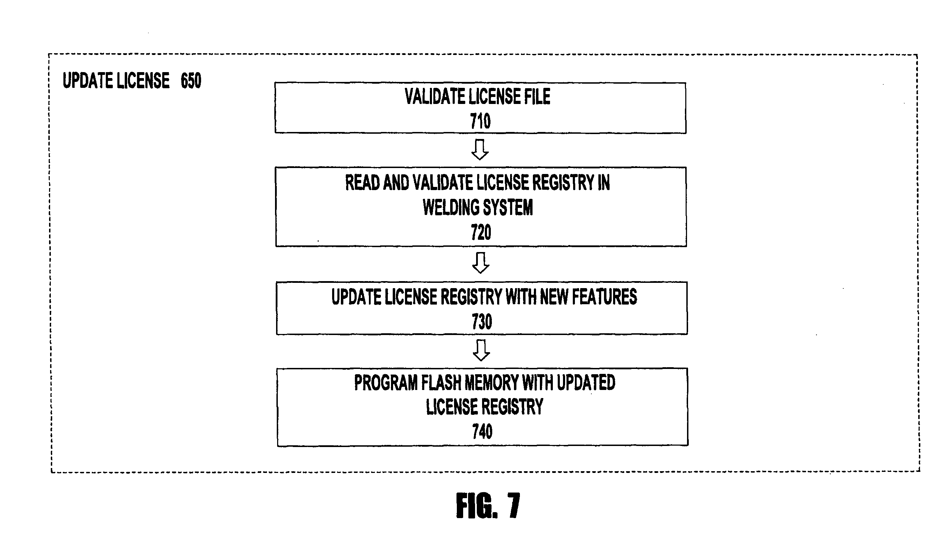

In operation 650, facilitation system 200 updates license registry 150 in welding system 100. A more full description of this operation is provided in FIG. 7.

Operations 600, 610, 620, 630, 640 and 650 are illustrated separately for convenience of description. These operations can be combined, reordered, or further split in any manner that fulfills the functionality described herein.

An exemplary method of updating licenses according to the invention is illustrated in FIG. 7. In operation 710, the facilitation system 200 validates the license file 380 received from license management system 300. For example, facilitation system 200 checks license file 380 to see if it is complete and undamaged. In operation 720, facilitation system 200 reads and validates the license registry 150 in welding system 100. For example, facilitation system 200 checks the license registry 150 to determine which licenses are stored therein, and if any licenses are incomplete or damaged. In operation 730, facilitation system 200 updates license registry 150 with new license information to enable features in welding system 100. In operation 740, facilitation system 200 programs flash memory 112 with an updated license registry 150. Operations 710, 720, 730 and 740 are illustrated separately for convenience of description. These operations can be combined, reordered, or split in any manner that fulfills the functionality described herein.

In another exemplary embodiment of the invention, the system may be used to download and install new functionality to welding system 100. In such a case, a user would select the new functionality in a manner similar to that discussed above for activating an unlicensed feature. However, in the case of a new function, operative code, weld tables, etc. for the new functionality would be sent from license management system 300 to facilitation system 200 along with a license file 380. Accordingly, license management system 300 may include a database of new operative code, weld tables, etc. for new functions, or an interface with a separate system for storing such information. Similarly, facilitation system 200 may also include functionality to receive such information and install it in welding system 100.

In addition to new operative code and/or weld tables, new functions may also include new hardware. In such a case, new hardware can be automatically sent to the user via courier or any appropriate method. Alternatively, an alert can be sent to a technician provided by assignee, whereupon the technician will proceed to the user's facility to install the necessary hardware. If new hardware is required, license file 380 may be stored on media and provided with the new hardware.

In another exemplary embodiment of the invention, the system may be used to transfer a license from one welding system 100 to another welding system. In this case, facilitation system 200 will have to delete the license from one welding system 100 and add it to a second welding system 100. To provide such functionality, facilitation system 200 may repeat the method shown in FIGS. 6 and 7. Alternatively, facilitation system 200 may include a separate transfer mode for the user. In transfer mode, facilitation system 200 may create a revised license file 380 and report to license management system 300, rather than request that a new license file 380 be created. This would add to the efficiency of the system.

In another exemplary embodiment of the invention, facilitation system 200 may provide a backup of license registry 150 from welding system 100. For example, facilitation system 200 may routinely scan license registry 150 and copy its contents into a dedicated backup storage area, either within facilitation system 200 or stored on other media, servers, etc. This functionality can provide protection against corruption of, or damage to, license registry 150 or damage to control board 110.

While the invention has been particularly shown and described with reference to exemplary embodiments thereof, the invention is not limited to these embodiments. It will be understood by those of ordinary skill in the art that various changes in form and details may be made therein without departing from the scope of the invention as defined by the following claims.

**Reference numbers:**

| | | | |
|---|---|---|---|
| 100 | welding system | 310 | database |
| 110 | control board | 320 | licenses |
| 112 | memory | 330 | issued license records |
| 150 | license registry | 340 | user records |
| 151 | count | 380 | license file |
| 152 | license registry update | 382 | serial number |
| 153 | checksum | 600 | operation |
| 155 | license records | 610 | operation |
| 155a | license record | 620 | operation |
| 155b | license record | 630 | operation |
| 155n | license record | 640 | operation |
| 157 | identifier code | 650 | operation |
| 159 | serial number | 710 | operation |
| 180 | weld table | 720 | operation |
| 185 | operating instructions | 730 | operation |
| 187 | optional function identifier | 740 | operation |
| 190 | user interface | | |
| 200 | facilitation system | | |
| 210 | facilitation software | | |
| 250 | computing device | | |
| 300 | license management system | | |

## Claims

1. A system for managing licenses in a welding system (100), comprising:
a welding system (100) comprising a memory storing an unlicensed first optional welding function; and **characterised by**
a facilitation system (200) for obtaining a first license for the unlicensed first optional welding function and providing it to the memory of the welding system (100) to license the first optional welding function.

2. The system of claim 1, comprising:
a license management system (300) for storing a first license for the unlicensed first optional welding function; wherein the facilitation system (200) for obtaining the first license from the license management system (300) and providing it to the memory of the welding system (100) to license the first optional welding function.

3. The system recited in claim 2, wherein the memory (112) of the license management system also stores a list of licenses for optional functions related to the welding system (100), wherein the licenses are associated with the unique serial number (159) of the control board of the welding system.

4. The system recited in one of the claims 1 to 3, wherein the memory of the welding system also stores a weld table (180), wherein the weld table (180) includes operating instructions for the welding system (100) and the operating instructions include an optional function identifier indicating whether the particular operating instruction uses an optional welding function that requires a license.

5. The system recited in one of the claims 1 to 4, wherein the license management system (300) further comprises a memory for storing the first license.

6. The system recited in one of the claims 1 to 5, wherein the welding system further comprises a control board with a unique serial number (159).

7. The system recited in claim 5, wherein the license management system (300) further comprises memory (112) storing a list of licenses for optional functions related to the welding system (100), wherein the licenses are associated with the unique serial number (159) of the control board of the welding system (100).

8. A system for managing licenses in a welding system, in particular according to one of the claims 1 to 7, comprising a welding system comprising a memory storing a weld table (180), wherein the weld table (180) includes operating instructions for the welding system (100), **characterised by** an optional function identifier indicating whether the particular operating instruction uses an optional feature that requires a license.

9. A method of managing licenses in a welding system, the welding system in particular according to one of the claims 1 to 8, the method being **characterized by** comprising requesting a first license for an unlicensed first optional welding function in a welding system memory (112) from a license management system (300) and providing it to the memory (112) of the welding system (100) to license the first optional welding function.

10. The method of claim 9, comprising using a facilitation system (200) to request the first license for an unlicensed first optional welding function in a welding system memory (112) from a license management system and providing it to the memory of the welding system to license the first optional welding function.

11. The method recited in claim 9 or 10, further comprising storing a weld table (180) in the welding system memory (112), wherein the weld table (180) includes operating instructions for the welding system (100) and the operating instructions include an optional function identifier indicating whether the particular operating instruction uses an optional welding function that requires a license.

12. The method recited in one of the claims 9 to 11, wherein the license management system (300) further comprises a memory (112) for storing the first license.

13. The method recited in one of the claims 1 to 12, wherein the welding system (100) further comprises a control board with a unique serial number (159, 382).

14. The method recited in one of the claims 9 to 13, wherein the license management system (300) further comprises memory storing a list of licenses for optional functions related to the welding system (100), wherein the licenses are associated with the unique serial number (159, 382) of the control board of the welding system (100).

15. A method, in particular according to one of the claims 9 to 14, of managing licenses in a memory of a welding system (100) which also stores a weld table (180), **characterized in that** the weld table includes operating instructions for the welding system (100) and an optional function identifier indicating whether the particular operating instruction uses an optional feature that requires a license.

## Patentansprüche

1. System zum Verwalten von Lizenzen in einem Schweißsystem (100), das Folgendes umfasst:
ein Schweißsystem (100), das einen Speicher umfasst, der eine unlizenzierte erste optionale Schweißfunktion speichert; und **gekennzeichnet durch**
ein Prozessbegleitsystem (200) zum Erhalten einer ersten Lizenz für die unlizenzierte erste optionale Schweißfunktion und ihre Übermittlung an den Speicher des Schweißsystems (100) zum Lizenzieren der ersten optionalen Schweißfunktion.

2. System nach Anspruch 1, das Folgendes umfasst:
ein Lizenzverwaltungssystem (300) zum Speichern einer ersten Lizenz für die unlizenzierte erste optionale Schweißfunktion; wobei das Prozessbegleitsystem (200) dem Erhalten der ersten Lizenz von dem Lizenzverwaltungssystem (300) und ihrem Übermitteln an den Speicher des Schweißsystems (100) zum Lizenzieren der ersten optionalen Schweißfunktion dient.

3. System nach Anspruch 2, wobei der Speicher (112) des Lizenzverwaltungssystems außerdem eine Liste von Lizenzen für optionale Funktionen bezüglich des Schweißsystems (100) speichert, wobei die Lizenzen mit der eindeutigen Seriennummer (159) der Steuertafel des Schweißsystems verknüpft sind.

4. System nach einem der Ansprüche 1 bis 3, wobei der Speicher des Schweißsystems außerdem eine Schweißtabelle (180) speichert, wobei die Schweißtabelle (180) Betriebsanweisungen für das Schweißsystem (100) enthält und die Betriebsanweisungen einen optionalen Funktionsidentifikator enthalten, der anzeigt, ob die spezielle Betriebsanweisung eine optionale Schweißfunktion verwendet, die eine Lizenz erfordert.

5. System nach einem der Ansprüche 1 bis 4, wobei das Lizenzverwaltungssystem (300) des Weiteren einen Speicher zum Speichern der ersten Lizenz umfasst.

6. System nach einem der Ansprüche 1 bis 5, wobei das Schweißsystem des Weiteren eine Steuertafel mit einer eindeutigen Seriennummer (159) umfasst.

7. System nach Anspruch 5, wobei das Lizenzverwaltungssystem (300) des Weiteren einen Speicher (112) umfasst, der eine Liste von Lizenzen für optionale Funktionen bezüglich des Schweißsystems (100) speichert, wobei die Lizenzen mit der eindeutigen Seriennummer (159) der Steuertafel des Schweißsystems (100) verknüpft sind.

8. System zum Verwalten von Lizenzen in einem Schweißsystem, insbesondere nach einem der Ansprüche 1 bis 7, das ein Schweißsystem umfasst, das einen Speicher umfasst, der eine Schweißtabelle (180) speichert, wobei die Schweißtabelle (180) Betriebsanweisungen für das Schweißsystem (100) enthält, **gekennzeichnet durch** einen optionalen Funktionsidentifikator, der anzeigt, ob die spezielle Betriebsanweisung ein optionales Funktionsmerkmal verwendet, das eine Lizenz erfordert.

9. Verfahren zum Verwalten von Lizenzen in einem Schweißsystem, insbesondere des Schweißsystems nach einem der Ansprüche 1 bis 8, wobei das Verfahren **dadurch gekennzeichnet** ist, das es Folgendes umfasst: Anfordern einer ersten Lizenz für eine unlizenzierte erste optionale Schweißfunktion in einem Schweißsystemspeicher (112) von einem Lizenzverwaltungssystem (300) und Übermitteln der Lizenz an den Speicher (112) des Schweißsystems (100) zum Lizenzieren der ersten optionalen Schweißfunktion.

10. Verfahren nach Anspruch 9, das die Verwendung eines Prozessbegleitsystems (200) umfasst, um die erste Lizenz für eine unlizenzierte erste optionale Schweißfunktion in einem Schweißsystemspeicher (112) von einem Lizenzverwaltungssystem anzufordern und die Lizenz an den Speicher des Schweißsystems zum Lizenzieren der ersten optionalen Schweißfunktion zu übermitteln.

11. Verfahren nach Anspruch 9 oder 10, das des Weiteren das Speichern einer Schweißtabelle (160) in dem Schweißsystemspeicher (112) umfasst, wobei die Schweißtabelle (180) Betriebsanweisungen für das Schweißsystem (100) enthält und die Betriebsanweisungen einen optionalen Funktionsidentifikator enthalten, der anzeigt, ob die spezielle Betriebsanweisung eine optionale Schweißfunktion verwendet, die eine Lizenz erfordert.

12. Verfahren nach einem der Ansprüche 9 bis 11, wobei das Lizenzverwaltungssystem (300) des Weiteren einen Speicher (112) zum Speichern der ersten Lizenz umfasst.

13. Verfahren nach einem der Ansprüche 1 bis 12, wobei das Schweißsystem (100) des Weiteren eine Steuertafel mit einer eindeutigen Seriennummer (159, 382) umfasst.

14. Verfahren nach einem der Ansprüche 9 bis 13, wobei das Lizenzverwaltungssystem (300) des Weiteren einen Speicher umfasst, der eine Liste von Lizenzen für optionale Funktionen bezüglich des Schweißsystems (100) speichert, wobei die Lizenzen mit der eindeutigen Seriennummer (159, 382) der Steuertafel des Schweißsystems (100) verknüpft sind.

15. Verfahren, insbesondere nach einem der Ansprüche 9 bis 14, zum Verwalten von Lizenzen in einem Speicher eines Schweißsystems (100), der außerdem eine Schweißtabelle (180) speichert, **dadurch gekennzeichnet, dass** die Schweißtabelle Betriebsanweisungen für das Schweißsystem (100) und einen optionalen Funktionsidentifikator enthält, der anzeigt, ob die spezielle Betriebsanweisung ein optionales Funktionsmerkmal verwendet, das eine Lizenz erfordert.

## Revendications

1. Système pour gérer des licences dans un système de soudage (100), comprenant :
un système de soudage (100) comprenant une mémoire stockant une première fonction de soudage facultative sans licence ; et
**caractérisé par**
un système de facilitation (200) pour obtenir une première licence pour la première fonction de soudage facultative sans licence et la fournir à la mémoire du système de soudage (100) pour exploiter la première fonction de soudage facultative sous licence.

2. Système selon la revendication 1, comprenant :
un système de gestion de licence (300) pour stocker une première licence pour la première fonction de soudage facultative sans licence ; dans lequel le système de facilitation (200) est destiné à obtenir la première licence auprès du système de gestion de licence (300) et à la fournir à la mémoire du système de soudage (100) pour exploiter la première fonction de soudage facultative sous licence.

3. Système selon la revendication 2, dans lequel la mémoire (112) du système de gestion de licence stocke également une liste de licences pour des fonctions facultatives relatives au système de soudage (100), dans lequel les licences sont associées au numéro de série unique (159) de la carte de commande du système de soudage.

4. Système selon l'une quelconque des revendications 1 à 3, dans lequel la mémoire du système de soudage stocke également un tableau de soudage (180), dans lequel le tableau de soudage (180) comprend des instructions d'exploitation pour le système de soudage (100) et les instructions d'exploitation comprennent un identifiant de fonction facultative indiquant si l'instruction d'exploitation particulière utilise une fonction de soudage facultative nécessitant une licence.

5. Système selon l'une des revendications 1 à 4, dans lequel le système de gestion de licence (300) comprend en outre une mémoire pour stocker la première licence.

6. Système selon l'une des revendications 1 à 5, dans lequel le système de soudage comprend en outre une carte de commande avec un numéro de série unique (159).

7. Système selon la revendication 5, dans lequel le système de gestion de licence (300) comprend en outre une mémoire (112) stockant une liste de licences pour des fonctions facultatives relatives au système de soudage (100), dans lequel les licences sont associées au numéro de série unique (159) de la carte de commande du système de soudage (100).

8. Système pour gérer des licences dans un système de soudage, en particulier selon l'une des revendications 1 à 7, comprenant un système de soudage comprenant une mémoire stockant un tableau de soudage (180), dans lequel le tableau de soudage (180) comprend des instructions d'exploitation pour le système de soudage (100), **caractérisé par** un identifiant de fonction facultative indiquant si l'instruction d'exploitation particulière utilise une fonction facultative nécessitant une licence.

9. Procédé pour gérer des licences dans un système de soudage, en particulier le système de soudage selon l'une des revendications 1 à 8, le procédé étant **caractérisé en ce qu'**il comprend la demande d'une première licence pour une première fonction de soudage facultative sans licence dans une mémoire de système de soudage (112) à partir d'un système de gestion de licence (300) et la fourniture de celle-ci à la mémoire (112) du système de soudage (100) pour exploiter la première fonction de soudage facultative.

10. Procédé selon la revendication 9, comprenant l'utilisation d'un système de facilitation (200) pour demander la première licence pour une première fonction de soudage facultative sans licence dans une mémoire de système de soudage (112) à partir d'un système de gestion de licence et la fournir à la mémoire du système de soudage pour exploiter la première fonction de soudage facultative sous licence.

11. Procédé selon la revendication 9 ou 10, comprenant en outre le stockage d'un tableau de soudage (180) dans la mémoire de système de soudage (112), dans lequel le tableau de soudage (180) comprend des instructions d'exploitation pour le système de soudage (100) et les instructions d'exploitation comprennent un identifiant de fonction facultative indiquant si l'instruction d'exploitation particulière utilise une fonction de soudage facultative nécessitant une licence.

12. Procédé selon l'une des revendications 9 à 11, dans lequel le système de gestion de licence (300) comprend en outre une mémoire (112) pour stocker la première licence.

13. Procédé selon l'une des revendications 1 à 12, dans lequel le système de soudage (100) comprend en outre une carte de commande avec un numéro de série unique (159, 382).

14. Procédé selon l'une des revendications 9 à 13, dans lequel le système de gestion de licence (300) comprend en outre une mémoire stockant une liste de licences pour des fonctions facultatives relatives au système de soudage (100), dans lequel les licences sont associées au numéro de série unique (159, 382) de la carte de commande du système de soudage (100).

15. Procédé, en particulier selon l'une des revendications 9 à 14, pour gérer des licences dans une mémoire d'un système de soudage (100) stockant également un tableau de soudage (180), **caractérisé en ce que** le tableau de soudage comprend des instructions d'exploitation pour le système de soudage (100) et un identifiant de fonction facultative indiquant si l'instruction d'exploitation particulière utilise une fonction facultative nécessitant une licence.
